# EUROPEAN PATENT APPLICATION

(11) **EP 3 827 651 A1**
(43) Date of publication of application: **02.06.2021**
(21) Application number: 19212660.5
(22) Date of filing: 29.11.2019
(51) Int. Cl.: A01B 15/14, A01B 23/04

(54) **FRAME FOR AGRICULTURAL IMPLEMENTS**

(71) Applicant: CNH Industrial Sweden AB, 590 96 Överum (SE)
(72) Inventor: Hertzog, Daniel, 59376 Blackstad (SE); Linderson, Bengt Per-Inge, 594 94 Odensvi (SE); Wallin, Per Dennis, 693 37 Västervik (SE); Nilsson, Carl Ola Fredrik, 59340 Västervik (SE); Svensson, Robert, 59095 Loftahammar (SE); Nåhdin, Rickard Karl Gustav, 59492 Gamleby (SE)
(74) Representative: CNH Industrial IP Department

(57) **Abstract**

A frame (10, 100, 800A, 1000A) for an agricultural implement (12), the frame (10, 100, 800A, 1000A) being able to support a plurality of ground engaging tools (22a-40b) and extending between a first end (16) that is connectable to an agricultural work vehicle (7) and an opposite, second end (18), wherein the frame (10, 100, 800A, 1000A) defines at least one frame cavity (102, 802A, 1002A) extending at least partly between the first (16) and second end (18) of the frame, and wherein a mounting structure (120, 820A, 1020A) for securing a cable and/or a hydraulic conduit is located inside the frame cavity (102, 802A, 1002A).

## Description

### Background of the Invention

The present disclosure relates to a frame for an agricultural implement, particularly, but not exclusively, to a frame for an agricultural plough. Other aspects relate to an agricultural implement comprising the frame and an agricultural machinery comprising the agricultural implement connected to a tractor.

In agriculture, farming cycles are followed that can roughly be divided into the different steps of land preparation, seed sowing, fertilizing, irrigation, crop growth, and harvesting. Each of these steps is critical to yield optimal crop results and achieve the desired returns on initial investments. Of the listed steps, land preparation is typically further divided into steps of, as necessary, clearing obstructions (e.g. bushes, stones and rocks) and subsequent tillage.

Tilling crumbles and loosens the soil, improves the soil structure and incorporates crop residues and manure into the soil, thus fertilizing the ground. The improved soil structure allows for increased plant root growth, soil aeration and water penetration/filtration. Overall this results in higher yields, better long-term soil fertility, soil moisture retention, and weed management. Tillage can be separated into primary (relatively deep) and secondary (relatively shallow) tillage. In primary tillage, such as ploughing, the soil is turned over such that nutrients come to the surface. In addition to turning up the soil to bring fresh nutrients to the top and depositing plant residue below where it will break down, this process also aerates the earth - enabling it to hold more moisture. Preparing the land to a greater depth produces a rougher surface finish than secondary tillage. Secondary tillage (e.g. seedbed cultivation) breaks up soil clods into smaller masses which might be desirable for small seeds or plants that have minimal clod-handling ability.

Primary tillage, and particularly ploughing, is widely regarded as one of the most effective alternatives of preventing crop disease, removing weeds, and controlling mice and other pests. In its simplest form the turnplough, also known as the mouldboard plough, includes a variety of plough bodies, which are blades for penetrating and turning over the soil in arrays of adjacent trenches, known as furrows. Ploughs typically include a plurality of plough bodies connected to a plough frame in a laterally offset manner. Each plough body is connected to the plough frame (or frame) via corresponding beams. The plough frame, in turn, is connected to a towing or pushing vehicle via a headstock arranged at a front or back end of the frame.

Most modern ploughs are of the reversible type, in which the frame of the plough is rotatable by 180 degrees (reversed) with respect to the headstock. A turning cylinder attached to the headstock may be used to rotate (reverse) the plough. Before rotating the plough, the frame is lifted by a towing vehicle that is connected to the headstock end of the frame. The reversal process may commence once the frame is lifted sufficiently high that all of the plough bodies are elevated above the ground. During rotation of the so elevated frame, a first set of plough bodies, which is initially arranged below the frame (first configuration), is transferred to the top of the frame. At the same time, a second set of plough bodies, which is initially arranged on top of the frame, is then transferred to a position below the frame. The reversible plough is then in its second configuration. This process works both ways, such that the frame may also be rotated back to its first configuration. Whenever the plough is reversed, the first and the second set of plough bodies swap position.

In both configurations, plough the plough bodies may be biased into the ground by hydraulic actuators connected to a hydraulic accumulator and/or a hydraulic fluid supply of the agricultural work vehicle. As a consequence, numerous hydraulic fluid lines may extend along the length of the plough implement to connect the various hydraulic actuators with hydraulic fluid from the agricultural work vehicle. Similarly, ever increasing automation of agricultural ploughs might require wired electrical connections between the agricultural work vehicle and the plough implement. High numbers of hydraulic lines and electrical wires may cause packaging space issues. Furthermore, the fluid lines and the electrical wires may be subject to adverse weather conditions that can significantly reduce the service life of the plough.

In view of the aforementioned problem, there is a need for improved ploughs, particularly plough frames.

It is an aim of the present disclosure to solve or at least ameliorate one or more problems of the prior art.

### Summary of the Invention

Aspects and embodiments of the disclosure provide a frame, an agricultural implement, and an agricultural machinery as claimed in the appended claims.

According to a first aspect of the present disclosure, there is provided a frame for an agricultural implement, the frame able to support a plurality of ground engaging tools and extending between a first end that is connectable to an agricultural work vehicle and an opposite, second end, wherein the frame defines at least one frame cavity extending at least partly between the first and second end of the frame, and wherein a mounting structure for securing a cable and/or a hydraulic conduit is located inside the frame cavity.

The provision of a frame defining a cavity allows for a cable and/or a hydraulic conduit to be located inside the frame cavity, which protects the cable and/or the hydraulic conduit from adverse weather conditions, impacts and other causes of damage. The provision of a mounting structure for securing the cable and/or the hydraulic conduit inside the frame cavity allows for the cable and/or the hydraulic conduit to be safely secured inside the frame cavity. This is advantageous because the cable and/or the hydraulic conduit can be arranged to fit different frames and frame cavities without the risk of the cable and/or the hydraulic conduit moving such that they become tangled or damaged. The provision of a mounting structure also has the advantage of saving time during inspection and/or maintenance of the cable and/or the hydraulic conduit.

The mounting structure may be for securing the cable and/or the hydraulic conduit inside the frame cavity such that it extends along a longitudinal direction of the frame. That is in a direction that extends between the first and second end of the frame.

The frame may comprise at least one aperture providing access to the frame cavity from the outside of the frame. Advantageously this can save time during installation, inspection, and/or maintenance of a cable and/or a hydraulic conduit located inside the frame.

The mounting structure of the frame may comprise an insert, which may be a foam insert. This can allow for a cable and/or a hydraulic conduit to be secured inside the frame. The provision of an insert advantageously allows for an easily customisable arrangement of the cable and/or the hydraulic conduit inside the frame. The provision of a foam insert allows for vibrations to be absorbed by the foam, shielding the cable and/or the hydraulic conduit secured inside of it.

The mounting structure of the frame may comprise an insert which extends continuously along some or all of the length of the frame. The provision of an insert extending continuously along the length of the frame has the advantage that it will fully support a cable and/or a hydraulic conduit extending along the length of the frame as opposed to a plurality of separate inserts which would only support the cable and/or the hydraulic conduit at certain points of its length.

The mounting structure may comprise an insert secured to an inner surface of the frame, optionally through adhesive or mechanical means. This can ensure that the insert remains in a desired position inside the frame regardless of the shape or size of the insert or the orientation of the frame.

The mounting structure of the frame may comprise an insert that has a shape that conforms with the shape of the frame cavity. This can provide an advantage that the insert will not move inside the frame, therefore safely securing a cable and/or a hydraulic conduit inside of it.

The mounting structure of the frame may comprise an insert that has a rectangular, a circular, or a U-shaped cross-section.

The mounting structure of the frame may comprise an insert which comprises an insert-cavity (which may be an inner foam cavity) extending at least partly between the first and second end of the frame. This can allow for a cable and/or a hydraulic conduit to be secured inside an insert without causing the deformation of the insert. The provision of an insert having an insert-cavity additionally facilitates the access to a cable and/or a hydraulic conduit secured inside the insert.

The mounting structure of the frame may comprise a clip attached to the inner surface of the frame. This can allow for a cable and/or a hydraulic conduit to be secured in a more compact way, saving weight and space.

The mounting structure of the frame may comprise a clip which comprises a first part and a second part defining a clip cavity between each other. At least the first part can be attached to the inner surface of the frame. The provision of a clip comprising two parts allows for a cable and/or a hydraulic conduit to be safely secured between them, reducing the chances of the cable and/or the hydraulic conduit becoming detached from the clip.

The mounting structure of the frame may comprise a clip which comprises a first part and a second part defining a clip cavity between each other. At least the first part can be attached to the inner surface of the frame. The second part can be connectable to the first part, optionally through magnetic or mechanical fastening members. The provision of a clip comprising a connectable first and second part allows for the two parts to be safely connected in different arrangements. I.e. in some cases where the clip may be easily accessible, mechanical fastening members may be suitable to provide a secure connection. In other cases where the clip may be more difficult to access, magnetic fastening members may be more suitable due to being more easily releasable than mechanical fastening members.

The mounting structure of the frame may comprise a clip which comprises a first part and a second part defining a clip cavity between each other. The first part may be attached to the inner surface of the frame. The second part may be attached to an opposite surface to the first part. The first and second parts may be in contact with each other when the clip is in a closed state. The provision of a clip comprising a first and second part, which are in contact with each other whilst each being attached to the inner surface to the frame, has the benefit that the clip can have a reinforcing function. The clip, being connected to opposing surfaces of the frame, can act as an additional reinforcement of the frame, increasing its structural strength.

The mounting structure of the frame may comprise a clip which comprises a first part and a second part defining a clip cavity between each other. The first part may be attached to the inner surface of the frame. The second part may be attached to an opposite surface to the first part. The first and second parts may be in contact with each other when the clip is in the closed state. The second part of the clip may be moveable with respect of the first part. The provision of the second part being movable with respect to the first part has the added benefit of a cable and/or a hydraulic conduit being more easily inserted into the clip cavity.

The mounting structure may comprise a tray structure attached to an inner surface of the frame. The tray may be configured to secure a cable and/or a hydraulic conduit located inside it against the inner surface of the frame to which the tray is attached. The tray may comprise contact points or surfaces which are in contact with the inner surface of the frame. The tray may comprise one or more receiving portions (e.g. a recess, a cavity), between the contact points or along a contact surface, in which a cable and/or a hydraulic conduit can be received. The provision of a tray allowing to secure a cable and/or a hydraulic conduit against an inner surface of the frame, without requiring multiple interacting components, can allow for savings in manufacturing cost and greater reliability of the mounting structure. Another benefit that the tray offers is providing a compact securing solution.

The tray may be produced by folding a sheet of material such as to define points of contact and receiving portions. This type of tray would have the benefits of being light and involving less material wastage.

The tray may be produced by selecting a block of material, and altering it to define one or more receiving portions (e.g. cavities) along one of its surfaces. This type of tray would have the benefit of being more robust. Also, providing a greater contact surface of the tray would allow for a greater choice of tray attachment.

The tray may comprise a plurality of materials. The tray may comprise an outer part and an inner part, each of which being of different material compositions. The outer part may comprise a rigid material which provides robust protection to a cable and/or a hydraulic conduit housed inside. The inner part may comprise a compliant material (e.g. foam) which can accommodate and secure differently sized cables and/or a hydraulic conduits. The outer part may be more rigid than the inner part. Similarly, the inner part may be more compliant than the outer part.

The tray may extend along some or all of the length of the frame. The tray may only extend along a part of the length of the frame if doing so is appropriate due to the weight and/or length of the cables and/or hydraulic conduits.

According to another aspect of the present disclosure, there is provided an agricultural implement comprising any frame disclosed herein. In one embodiment, the agricultural implement may be a plough, for example a reversible plough, comprising one or more plough bodies connected to the frame.

In other aspects of the disclosure, an agricultural machinery is provided comprising any agricultural implement disclosed herein connected to the front and/or rear of an agricultural vehicle, e.g. a tractor.

Within the scope of this application it is expressly intended that the various aspects, embodiments, examples and alternatives set out in the preceding paragraphs, and the claims and/or the following description and drawings, and in particular the individual features thereof, may be taken independently or in any combination. That is, all embodiments and all features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### Brief Description of the Drawings

One or more embodiments of the present disclosure will now be described by way of example only, with reference to the accompanying drawings, in which:
Figures 1A to 1C show various views of an agricultural plough;
Figure 2 shows a schematic view of an agricultural machinery in a working field;
Figures 3A to 3D show schematic cross-sections of foam inserts, located inside of frames, according to various embodiments of the present disclosure;
Figures 4A to 4C show longitudinal cuts of a frame and foam insert arrangement in perspective view according to an embodiments of the present disclosure;
Figures 5A to 5B show schematic cross-sections of foam inserts secured to frames according to various embodiments of the present disclosure;
Figures 6A to 6D show schematic cross-sections of clips, located inside of frames, according to various embodiments of the present disclosure;
Figures 7A to 7D show schematic cross-sections of clips, located inside of frames, according to various further embodiments of the present disclosure; and
Figures 8A to 8C show schematic cross-sections of trays, located inside of frames, according to various embodiments of the present disclosure.

### Detailed Description of the Drawings

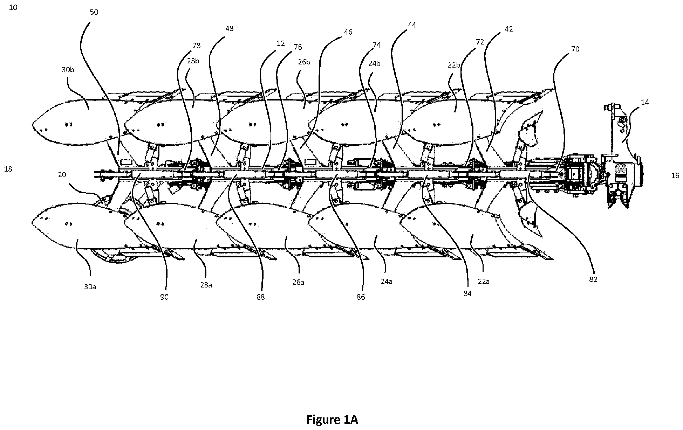

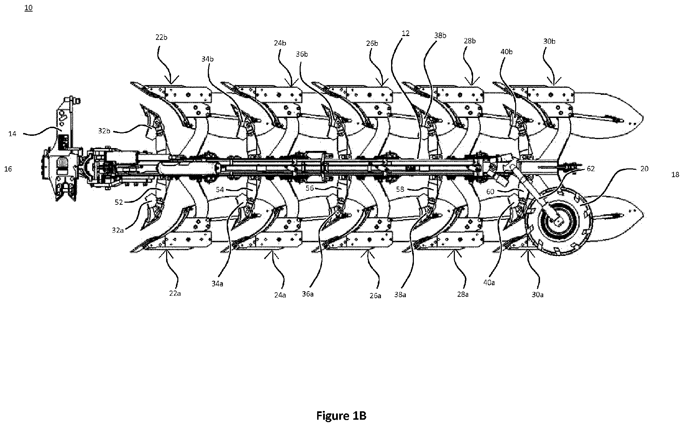

Figures 1A to 1C show various views of an agricultural implement, particularly a plough 10. As will be described in more detail below, the plough 10 shown in Figures 1A to 1C is a reversible plough.

The plough 10 comprises a frame 12. The frame 12 extends between a headstock 14 at a first, front end 16 of the plough towards a second, rear end 18 of the plough. The frame 12 supports a variety of ground-engaging tools. In the example of Figures 1A to 1C, the ground engaging tools include plough bodies 22a, 22b, 24a, 24b, 26a, 26b, 28a, 28b, 30a, 30b and plough skimmers 32a, 32b, 34a, 34b, 36a, 36b, 38a, 38b, 40a, 40b. Each of the plough bodies 22a, 22b, 24a, 24b, 26a, 26b, 28a, 28b, 30a, 30b are connected to the frame 12 by means of beams 42, 44, 46, 48, 50. Each of the beams 42, 44, 46, 48, 50 has a substantially γ-shaped structure to support pairs of plough bodies.

A first beam 42 supports a first pair of plough bodies 22a, 22b. A second beam 44 supports a second pair of plough bodies 24a, 24b. A third beam 46 supports a third pair of plough bodies 26a, 26b. A fourth beam 48 supports a fourth pair of plough bodies 28a, 28b. A fifth beam 50 supports a fifth pair of plough bodies 30a, 30b.

Each of the beams 42, 44, 46, 48, and 50 of the plough 10 shown in Figures 1A to 1C includes a hydraulic stone-trip mechanism. To this end, each of the Y-shaped beams 42, 44, 46, 48, 50 is pivotable with respect to the frame 12 about pivots of a corresponding beam housing 70, 72, 74, 76, 78, such that each of the beams 42 to 50 can pivot their respective plough bodies 22a, 22b, 24a, 24b, 26a, 26b, 28a, 28b, 30a, 30b out of the soil, when the latter hits a subterranean obstacle, such as a stone buried in the soil. To avoid pivotal movement of the beams 42, 44, 46, 48, 50 and thus also a withdrawal of the corresponding plough bodies 22a to 30b from the soil during normal operation, i.e. when no subterranean obstacle is encountered, the beams are biased into a working position (horizontal position shown in Figure 1A) by means of hydraulic actuators 82, 84, 86, 88, and 90. Depending on the hydraulic pressure within hydraulic actuators 82 to 90, a bias-force is applied to the beams 42 to 50 biasing the beams into their working position (horizontal position in Figure 1A). A pivotal movement of the beams 42 to 50 is only possible if the bias-force of the hydraulic actuators 82 to 90 is overcome by a drag-force experienced by the plough bodies 22a to 30b working the soil. The bias-force of the hydraulic actuators 82 to 90 is adjusted such that the drag-force experienced by the plough bodies 22a to 30b is only overcome if significant obstacles are encountered.

Each of the hydraulic actuators 82 to 90 may be connected to an individual accumulator. Alternatively or additionally, the hydraulic actuators 82 to 90 may be connected to a common hydraulic accumulator.

Each of the pairs of plough bodies 22a, 22b, 24a, 24b, 26a, 26b, 28a, 28b, 30a, 30b is designed to create a furrow in the field when the plough is dragged behind or pushed by an agricultural vehicle such as a tractor. It follows that each run of the illustrated plough 10 through a field creates five adjacent furrows.

Skimmers 32a, 32b, 34a, 34b, 36a, 36b, 38a, 38b, 40a, 40b are attached in front of the plough bodies 22a, 22b, 24a, 24b, 26a, 26b, 28a, 28b, 30a, 30b. A first pair of skimmers 32a, 32b is arranged in front the first pair of plough bodies 22a, 22b. A second pair of skimmers 34a, 34b is arranged in front of the second pair of plough bodies 24a, 24b. A third pair of skimmers 36a, 36b is attached in front of the third pair of plough bodies 26a, 26b. A fourth pair of skimmers 38a, 38b is attached in front of the fourth pair of plough bodies 28a, 28b. A fifth pair of skimmers 40a, 40b is attached in front of the fifth pair of plough bodies 30a, 30b.

The skimmers 32a, 32b, 34a, 34b, 36a, 36b, 38a, 38b, 40a, 40b are arranged higher than their corresponding plough bodies 22a, 22b, 24a, 24b, 26a, 26b, 28a, 28b, 30a, 30b to not penetrate the soil as far as the plough bodies. It follows that the skimmers 32a, 32b, 34a, 34b, 36a, 36b, 38a, 38b, 40a, 40b are configured to only lift a top layer off the ground surface before the soil is turned over by the plough body that is arranged immediately behind the skimmer.

Each pair of skimmers 32a, 32b, 34a, 34b, 36a, 36b, 38a, 38b, 40a, 40b is attached to the frame 12 by means of a corresponding mounting assembly 52, 54, 56, 58, 60.

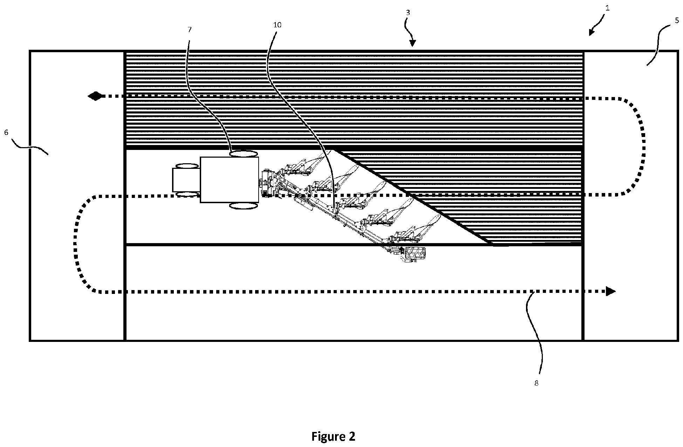

Turning to Figure 2, a typical operation of agricultural machinery comprising a tractor 7 and a plough 10 is described. In use, the plough 10 is drawn as an attachment (implement) behind a towing vehicle (e.g. tractor 7). It will be appreciated that it is equivalently feasible to locate the plough 10 in front or both in front and behind the tractor 7.

Figure 2 shows a schematic work area 1, e.g. a crop field, which is divided into a main field 3 and headlands 5,6. A tractor 7 draws the plough 10 across the main field 3 in generally parallel working rows. The working rows are part of the trajectory of the tractor and typically run in parallel with a long edge of the work area 1. Each working row represents an individual run of the agricultural machinery across the field between headlands 5 and 6. As will be described in more detail below, a five-furrow plough, such as the exemplary plough shown in Figures 1A to 1C creates a total of five furrows per run.

At the end of each run/working row the tractor 7 and plough 10 use the upcoming headland 5 or 6 for turning around, as indicated by trajectory 8. It is known in the art that the soil of the headlands 5, 6 is subject to greater levels of soil compaction as it receives more traffic per unit area than the main field 3. In order not to disturb the soil of the headlands 5 and 6 more than necessary, it is known to lift the ground engaging tools, such as the plough bodies and the skimmers, off the ground into a headland or transfer position, just before the plough 10 reaches the headlands 5 or 6 respectively. Once the tractor 7 and the corresponding plough 10 have turned on the headland 5, 6, the ground engaging tools of the plough 10 are, again, lowered towards an operating position to engage the soil of the main field 3.

In the illustration of Figure 2, the plough 10 is working on the main field 3 and, therefore, is arranged in the operating position. As the plough 10 reaches the border between the headland 5/6 and the main field 3, the plough 10 is transferred to a transfer position. It follows that each working row starts with an adjustment of the plough from the transfer position into the operating position and ends with an adjustment of the plough from the operating position into the transfer position.

The plough 10 shown in Figures 1A to 1C is of the fully-mounted type. In fully-mounted ploughs, the weight of the plough is carried exclusively by the tractor, when the plough is in its transfer position (on the headlands). In other words, the plough is then exclusively supported by the tractor 7 via headstock 14 and maybe lifted off the ground with a lift cylinder of a tractor linkage.

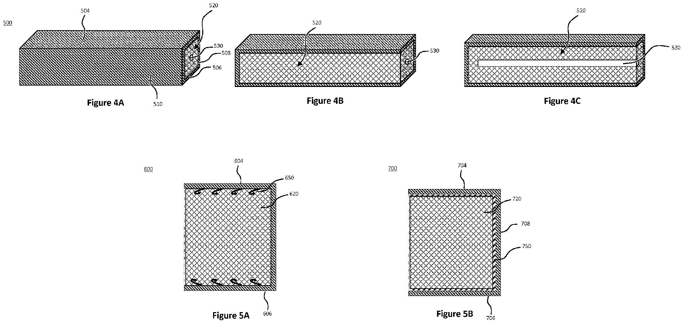

During the turning movement on the headlands, the plough 10 is also reversed. That is, the frame 12 is rotated by about 180 degrees with respect to the headstock 14 to move the plough from a first configuration to a second configuration. It will be appreciated that if the operator is ploughing in the furrow (as shown in Figure 4), then the frame 12 may not be rotated by exactly 180 degrees, it is more likely to be 190-200 degrees or 160-170 degrees depending on which direction the frame 12 turns. If the operator is ploughing on-land, then the frame 12 may be rotated by an angle that is closer to 180 degrees, perhaps exactly 180 degrees.

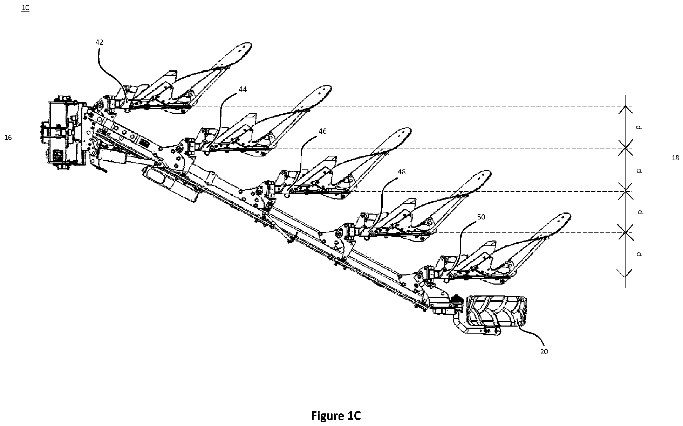

In its first configuration shown in Figures 1A to 1C, the plough 10 is set up such that plough bodies 22a, 24a, 26a, 28a, and 30a of each of the pairs are in contact with the soil. This first configuration is shown in Figure 2 and sometimes referred to as the "right turning configuration", since the mouldboards of the plough bodies 22a, 24a, 26a, 28a and 30a are arranged to move the soil sideways from left to right when viewed in the direction of travel. In its second configuration (not illustrated), the plough 10 is set up such that plough bodies 22b, 24b, 26b, 28b, and 30b of each of the pairs are in contact with the soil. This second configuration is achieved after rotating the main frame by 180 degrees, such that the majority of plough bodies are arranged to the right of the tractor (not shown). It follows that the second configuration is also referred to as the "left turning configuration".Tilling the field with the plough 10 in this first configuration provides a first furrow created by the first plough body 22a, a second furrow created by the second plough body 24a, a third furrow created by the third plough body 26a, a fourth furrow created by the fourth plough body 28a, and a fifth furrow created by the fifth plough body 30a. A furrow width is determined by the lateral distance d between the plough bodies 22a, 22b, 24a, 24b, 26a, 26b, 28a, 28b, 30a, 30b, as illustrated in Figure 1C.

As the reversible plough 10 reaches the end of the first run, the frame 12 is rotated by 180 degrees (reversed) with respect to the headstock 14. A turning cylinder (not shown), attached to the headstock 14 is typically used to rotate (reverse) the plough 10. During rotation of the frame, the first set of plough bodies, e.g. 22a, 24a, 26a, 28a, 30a, are transferred to the top of the plough 10. At the same time, the second set of plough bodies e.g. 22b, 24b, 26b, 28b, 30b, that were not in use in the previous run is then transferred to the lower end of the plough 10 and will be submerged in the soil during the next run. The reversible plough is then in its second configuration (not shown).

Executing a second run of the field with the plough 10 in this second configuration provides a first furrow created by the sixth plough body 22b, a second furrow created by the seventh plough body 24b, a third furrow created by the eighth plough body 26b, a fourth furrow created by the ninth plough body 28b, and a fifth furrow created by the tenth plough body 30b.

Reversing the plough 10 between consecutive runs has the advantage that the plough bodies 22a, 22b, 24a, 24b, 26a, 26b, 28a, 28b, 30a, 30b that engage the soil always face the same end of the field, irrespective of the tractor's orientation.

In both configurations of the plough implement 10 the frame 12 is supported by an implement wheel 20. The implement wheel 20 is arranged at the back end 18 of the plough implement 10. Since the plough bodies 22a, 22b, 24a, 24b, 26a, 26b, 28a, 28b, 30a, 30b and the skimmers 32a, 32b, 34a, 34b, 36a, 36b, 38a, 38b, 40a, 40b are generally fixed to the frame via beams 42, 44 46, 48 and 50 or rails 52, 54, 56, 58, 60, there is no possibility of adjusting the working depth of said ground engaging tools without changing the ground clearance of the frame 12. To this end, the plough 10 shown in Figures 1A to 1C includes implement wheel 20, which acts as a depth wheel to adjust the ground clearance of the frame 12. A linkage 62 provided between the implement wheel 20 and the frame 12 allows the operator to lift or lower the frame 12 with respect to a ground surface 80. The linkage 62 may be connected to an actuator, e.g. a hydraulic cylinder (not shown), for adjusting the distance between the implement wheel 20 and the frame, thereby lifting and lowering the frame. The linkage 62 and the actuator together form a depth adjustment apparatus for the plough bodies 22a, 22b, 24a, 24b, 26a, 26b, 28a, 28b, 30a, 30b and the skimmers 32a, 32b, 34a, 34b, 36a, 36b, 38a, 38b, 40a, 40b. Since the position of the plurality of first and second ground engaging tools is fixed with respect to the frame 12, any change in the frame's ground clearance will also affect the working depth of the plurality first and second ground engaging tools. In particular, if the frame 12 is lowered by shortening the linkage 62 between implement wheel 20 and the frame 12, then the working depth of the plurality of first ground engaging tools shown in Figures 1A to 1C is increased, i.e. the plurality of first ground engaging tools are lowered further into/towards the soil. If the frame 12 is lifted, by extending the linkage 62 between implement wheel 20 and the frame 12, then the working depth of the plurality of first ground engaging tools is decreased, i.e. the plurality of first ground engagement tools are either raised or completely pulled out of the soil. It will be appreciated that extending and retracting the linkage 62 will mainly raise or lower the back end of the plough implement 10. In order to evenly raise the front and the back end of the plough implement 10, the headstock 14 may be raised or lowered together with an adjustment of the linkage 62 of the implement wheel 20. Raising or lowering the headstock may be achieved by means of hydraulic cylinders connected to lifting arms of the agricultural work vehicle that carry the headstock 14.

It will be appreciated that agricultural implements like the plough 10 in Figures 1A to 1C include a number of hydraulic lines connecting a hydraulic pump of the agricultural work vehicle to the numerous hydraulic actuators, such as the hydraulic actuators of linkage 62 and headstock 14 or the hydraulic actuators 82, 84, 86, 88, 90 of beams 42, 44, 46, 48, and 50, of the plough 10. In some variations of the plough implement, the hydraulic fluid lines connecting the various hydraulic components may be arranged freely between the hydraulic actuators and the pump of the agricultural vehicle, that is outside of the frame 12 and the plough beams 42, 44, 46, 48, and 50. Hydraulic lines connected to the outside of the plough frame are subject to increased wear and therefore can decrease the service life of the plough implement.

Some of these problems can be solved through the use of a more accessible, hollow frame that can be used to house hydraulic and/or electric lines and protect them from adverse environmental conditions. In this case, the hydraulic and/or electric lines can be secured inside the frame in a manner that ensures their safety and durability, and optionally also in a manner that cooperates with any points of access to the cavity in the frame (such as an opening in a wall of the frame). The present disclosure provides different mounting structures for safely and conveniently securing hydraulic and/or electric lines in a cavity of a frame.

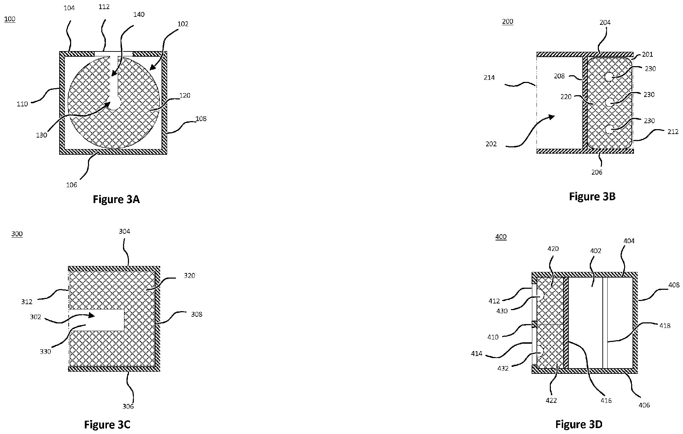

Figures 3A to 3D show schematic cross-sections of various embodiments of frames with mounting structures comprising foam inserts according to the present disclosure. A first embodiment of a frame with a mounting structure comprising a foam insert is shown in a schematic cross-section in Figure 3A. Figure 3A shows a frame 100. The frame 100 has a substantially rectangular shape and defines a frame cavity 102 extending between the first and second ends (not shown) of the frame 100. The cavity defined by the frame 100 may be sized and shaped to receive a number of mounting structures for hydraulic and/or electrical lines that connect the various actuators and sensors of the plough implement with corresponding supply and control systems of the agricultural machinery. It should be noted that the frame cavity may only extend along parts of the length of the frame 100 between its first and second end.

The frame cavity 102, of Figure 3A, is enclosed by four walls 104, 106, 108, 110. As illustrated, a first wall 104 of the frame 100 is arranged opposite to and in parallel with a second wall 106. The first and second walls 104, 106 of the frame 100 are connected by perpendicular third and fourth walls 108, 110. A third wall 108 extends between first side edges of the first and second walls 104, 106. A fourth wall 110 of the frame 100 extends between second side edges of the first and second walls 104, 106 that are opposite to the first side edges connected by the third wall 108.

A first aperture allows access to the frame cavity 102 from the outside of the frame 100. In the embodiment of Figure 3A, the first aperture is an opening 112 extending through the first wall 104 of the frame 100. Of course, it will be understood that the opening 112 may equivalently extend through one or more of the remaining walls 106, 108, or 110. Moreover, the frame 100 may also comprise a plurality of additional openings extending through one or more of the walls 104, 106, 108, 110.

In the embodiment of Figure 3A, the opening 112 is a cut out extending through the first wall 104 partly along the length of the frame between its first and second end. However, it is equivalently feasible to create an opening (not shown) that extends all the way between the first and second ends of the frame along any of the walls 104, 106, 108, 110.

In the illustration of Figure 3A, the first wall 104 may be an upper wall of the frame 100 in its first configuration (the right turning configuration). It follows that the second wall 106 is a lower wall in the first configuration of the frame 100. The third and fourth wall 108, 110 are side walls of the frame 100.

If the apertures, such as the opening 112, are arranged on both the first and second walls 104, 106, it may be preferable to offset these openings in the longitudinal direction of the frame 100 to allow access to the frame cavity 102 from the outside of the frame from both sides of the frame 100 without affecting the structural integrity of the frame 100 significantly.

Figure 3A shows a mounting structure comprising a foam insert 120. The foam insert 120 is located inside the frame cavity 102. The foam insert 120 has a substantially circular cross-section. The foam insert 120 defines an inner foam cavity 130. The foam cavity 130 has a substantially circular cross-section. The foam cavity 130 is located in the centre of the foam insert 120. The foam insert 120 further defines a groove 140. The groove 140 connects the foam cavity 130 to an outer surface of the foam insert 120. The groove 140 is aligned with the opening 112 in the first wall 104 to facilitate the access to the foam cavity 130. The width of the groove 140 is smaller than the width of the foam cavity 130 in this example. The foam cavity 130 is configured to accommodate one or more cables and/or hydraulic conduits, in use.

It will be understood that other alternative embodiments of the foam insert are possible aside from those shown in Figure 3A. For example, the groove may not be aligned with the opening. The foam insert may have a cross-section of other shapes e.g. square. The foam cavity may have a cross-section of other shapes e.g. square. The foam cavity may be located at a point that is not the centre of the frame and/or at a point that is not the centre of the foam insert. The foam insert may comprise more than one foam cavity connected to the groove. The foam insert may comprise more than one foam cavity connected to more than one groove each.

Another embodiment of a frame with a mounting structure comprising a foam insert is shown in Figure 3B. Figure 3B shows a frame 200. The frame 200 has a substantially I-beam shaped cross-section. The frame 200 has a first wall 204 and a second wall 206. The first and second walls 204, 206 are arranged in parallel on opposite sides of the frame 200. The first and second walls 204, 206 are connected by a third wall 208. The third wall 208 extends perpendicularly to the first and second walls 204, 206. In the illustrated embodiment, the third wall 208 is arranged laterally in the centre of the first and second walls 204, 206.

The third wall 208 divides a space between the first and second walls 204, 206 into two cavities 201, 202. A first frame cavity 201 extends at least partly along the length of the frame 200 on a first side of the third wall 208. A second frame cavity 202 extends at least partly along the length of the frame 200 on an opposite, second side of the third wall 208.

The first frame cavity 201 is accessible via a first aperture, such as the first void 212 indicated by the dashed lines in Figure 3B. The second frame cavity 202 is accessible from the outside of the frame 200 via a second aperture, such as the second void 214 shown by dashed lines in Figure 3B. The two frame cavities 201, 202 may be used to house various different hydraulic and electric lines required by the agricultural implement. In one example, one of the two cavities 201, 202 may be used to house electrical wiring, whereas the other of the two cavities 202 is used to house hydraulic lines. In this case, the third wall 208 acts as a form of physical separation between the hydraulic lines and the electric wires of the plough.

Figure 3B shows a mounting structure comprising a foam insert 220. The cross-section of the foam insert 220 is substantially rectangular in shape. The foam insert 220 substantially conforms to the shape of the first frame cavity 201. The foam insert 220 defines a plurality of foam cavities 230. The plurality of foam cavities 230 comprises three individual foam cavities. The cross-section of all individual foam cavities is identical in shape and size. The cross-section of the individual foam cavities is circular in shape. Each of the plurality of foam cavities 230 are spaced apart equally from their neighbouring foam cavities 230. The plurality of foam cavities 230 has individual foam cavities located equidistantly from the third wall 208. The plurality of foam cavities 230 has individual foam cavities located such that the distance between the first wall 204 and the foam cavity closest to the first wall 204 is equal to the distance between the second wall 206 and the foam cavity closest to the second wall 206. The different individual cavities of the plurality of foam cavities 230 may be used to house hydraulic and/or electric lines, or may be left empty.

In some examples, there may be one or more foam cavity. The one or more foam cavity may be located anywhere in the foam insert cross-section. In other examples only the first frame cavity 201 or the second frame cavity 202 may comprise a foam insert 220. The cross-section of the foam cavities 230 may be of a shape different to a circle. The foam inserts 220 may not fully conform to the shape of the frame cavities 201 , 202. In such cases foam inserts 220 could for example only occupy half of the width of the frame cavities 201, 202.

Another embodiment of a frame with mounting structure comprising a foam insert is shown in Figure 3C. Figure 3C shows a frame 300. The frame 300 has a substantially U-shaped cross-section. Accordingly, the frame 300 includes a first wall 304, which is arranged opposite to a second wall 306. The first and second walls 304, 306 are arranged in parallel and on opposite sides of the frame 300.

A third wall 308 is arranged perpendicularly to the first and second walls 304, 306. The third wall 308 connects the first and second walls 304, 306 along corresponding side edges. On an opposite side to the third wall 308, the frame 300 comprises an open end or void 312 defining an aperture for accessing a frame cavity 302 from the outside of the frame 300. The frame cavity 302 is defined by the first, second, and third walls 304, 306, 308 and may extend partly or fully along a longitudinal direction of the frame 300.

Figure 3C shows a mounting structure comprising a foam insert 320. The foam insert 320 has a substantially U-shaped cross-section. The foam insert 320 has a shape such that it conforms with the first, second, and third walls 304, 306, 308. The foam insert defines a foam cavity 330. The cross-section of the foam cavity 330 has a substantially rectangular shape. The foam cavity 330 extends laterally outwards from the centre of the foam insert 320, away from the third wall 308. The foam cavity 330 is located equidistantly from the first and second walls 304 and 306. The foam cavity 330 extends towards the void 312 when the foam insert is located in the frame cavity 302.

In alternative embodiments, the cross-section of the foam cavity may have other shapes e.g. an elongated semicircle. The foam cavity may be located at a location of the foam insert which is not equidistant from the walls. The foam insert may comprise more than one foam cavity. A more complex cross-section of the foam insert could help compartmentalise hydraulic and/or electric lines. The more than one foam cavities may extend in other directions other than towards the open end. The one or more foam cavity extending towards a wall facilitates that the hydraulic and/or electric lines will remain contained inside the frame.

Another embodiment of a frame with a mounting structure comprising a foam insert is shown in Figure 3D. Figure 3D shows a frame 400. The frame 400 of Figure 3D has a substantially rectangular cross-section. A first wall 404 is arranged parallel and opposite to a second wall 406. A third wall 408 and a fourth wall 410 connect the first and second walls 404, 406 in a perpendicular direction. The third wall 408 extends between the first and second walls 404, 406 along corresponding side edges of the first and second walls 404, 406. The fourth wall 410 extends between corresponding side edges of the first and second walls 404, 406 at an opposite side to the third wall 408. The first, second, third, and fourth walls 404, 406, 408, 410 define a frame cavity 402 that extends between a first and a second end of the frame 400.

Figure 3D illustrates two apertures, such as first and second openings 412, 414 arranged, in this example, on the fourth wall 410. The two openings 412, 414 may, for example, be longitudinal slots extending longitudinally along parts of the fourth wall 410. The first and second openings 412, 414 allow access to the frame cavity 402 from the outside of the frame 400, for example, to introduce or service hydraulic lines and/or electric wires that are received within the frame cavity 402.

Figure 3D further shows schematic reinforcement members 416, 418. As will be appreciated, the first and second reinforcement members 416, 418 may be offset from each other in a longitudinal and/or lateral direction of the frame 400. The first and second reinforcement members 416, 418 may be struts extending between the first wall 404 and the second wall 406. Alternatively, the reinforcement members may extend between any other walls or even diagonally across the frame cavity 402. The first and second reinforcement members 416, 418 may also be interior walls extending partly or fully within the frame cavity 402, for example in the longitudinal direction of the frame 400. Accordingly, the reinforcement members may increase the structural integrity of the frame 400.

Figure 3D shows a mounting structure comprising first and second foam inserts 420, 422. Each of the first and second foam inserts 420, 422 has a substantially rectangular shape. The combination of first and second foam inserts 420, 422 conforms to the shape of the frame cavity defined between the first, second, and fourth walls 404, 406, 410 and the reinforcement member 416. The first foam insert 420 defines a first foam cavity 430 and the second foam insert 422 defines a second foam cavity 432. The cross-section of the first and second foam cavities 430, 432 each have a substantially semi-circular shape. The first and second foam cavities 430, 432 are located such that they can be accessed through the first and second openings 412, 414. The provision of more than one separate foam insert can facilitate their installation in frames of complex geometries such as the frame 400 of Figure 3D.

It will be appreciated that in alternative embodiments, the foam cavities may face other surfaces (e.g. first, second, or third walls 404, 406, 408) and that the foam inserts may be located in other frame cavities of the frame. Also, in alternative embodiments the foam inserts may not necessarily have foam cavities at all. Instead, one or more cables and/or hydraulic conduits may be positioned between an outer surface of the foam insert and an inner surface of a wall of the frame. For instance, the foam insert can resiliently deform around a cable and/or a hydraulic conduit in order to restrict its movement inside the frame.

Figures 4A-4C show different schematic representations of a frame 500 according to an embodiment of the present disclosure. The frame 500 may be any type of frame including the frames 100-400 previously described, but for exemplary purposes it is represented as being square in cross-section and composed of a first, second, third and fourth wall 504, 506, 508, 510 of a length greater than their width. Figure 4A shows a perspective view of part of the frame 500. Figure 4A shows that the frame comprises a foam insert 520 inside of it and that the foam insert 520 conforms to the shape of the inside of the frame 500. Figure 4A additionally shows that the foam insert 520 defines a foam cavity 530 of circular cross-section.

Figure 4B shows the arrangement of Figure 4A without the fourth wall 504. Figure 4B shows the foam insert 520 extending along at least part of the length of the frame.

Figure 4C shows a longitudinal cross-section of the frame along the foam cavity 530. Figure 4C shows the foam cavity 530 extending along at least part of the length of the frame.

In other embodiments the foam insert may vary in cross-sectional size throughout the length of the frame. The cross-section of the foam cavity may also vary in size throughout the length of the frame. The position of the foam cavity with respect to the frame may also vary along the length of the frame. The foam cavity may be equidistant from all walls at a first end of the frame but be closer to one wall than to the other walls at a second end of the frame. In alternative embodiments, the features described with respect to the foam insert may also apply to any of the other foam inserts.

Figures 5A and 5B show the schematic cross-section of alternative ways that a foam insert can be secured to a frame.

Figure 5A shows a frame 600 and a foam insert 620 substantially identical to the frame and insert of Figure 3C. Parts of the frame 600 shown in Figure 5A that are substantially identical to parts of the frame 300 of Figure 3C have been labelled with corresponding reference signs increased by "300". Figure 5A shows the foam insert 620 which conforms to the cavity of the frame 600. The foam insert 620 is substantially rectangular in cross-section. Figure 5A shows a plurality of mechanical securing members 650. The mechanical securing members 650 are connected to the inside surface of the frame 600. The mechanical securing members 650 are connected to the first and second walls 604, 606. The mechanical securing members 650 are positioned such that they allow the insertion of the foam insert 620 into the frame cavity of frame 600, but obstruct the removal of the foam insert 620 from the frame cavity of the frame 600. The mechanical securing members 650 obstruct the removal of the foam insert 620 by piercing the foam insert 620. The mechanical securing members 650 are shaped like hooks. In other embodiments, the mechanical securing implement may have other shapes which achieve the same function as described above.

Figure 5B shows a frame 700 and a foam insert 720 substantially identical to the frame and insert of Figure 5A. Parts of the frame 700 shown in Figure 5B that are substantially identical to parts of the frame 600 of Figure 5A have been labelled with corresponding reference signs increased by "100". Figure 5B shows an embodiment in which the foam insert 720 is secured to the frame 700 through an adhesive securing member 750. The adhesive securing member 750 acts as an intermediate layer between the foam insert 720 and the frame 700. The adhesive securing member 750 is located between the foam insert 720 and the first, second, and third walls 704, 706, 708. The adhesive securing member 750 may be applied to the foam insert 720 prior to its insertion into the cavity of the frame 700. Alternatively, the adhesive securing member 750 may be applied to the walls of the cavity of the frame 700 prior to the insertion of the foam insert 720. The adhesive securing member 750 may comprise any type of adhesive substance and in any format. The adhesive securing member 750 may be a paste, liquid, film, pellet or tape. In alternative embodiments, the adhesive securing member may be located between only one or more of any of the walls of the frame and the foam insert.

Alternatively, the foam insert may be secured to the frame through a combination of the mechanical securing members and the adhesive securing member. For example, the adhesive securing member may be applied to the third wall and the mechanical securing members may be applied to the first and second walls. It will also be appreciated that the arrangements of Figures 5A and 5B may be implemented in other type of frames such as the frames shown in Figures 3A-3D.

Although various ones of the above examples describe foam inserts, it will be appreciated that inserts made of different materials may be used. Such materials may or may not be resiliently deformable. Therefore, any of the examples disclosed herein that include a foam insert, optionally with one or more foam cavities, can also be put into practice more generally with an insert that optionally includes one or more insert-cavities.

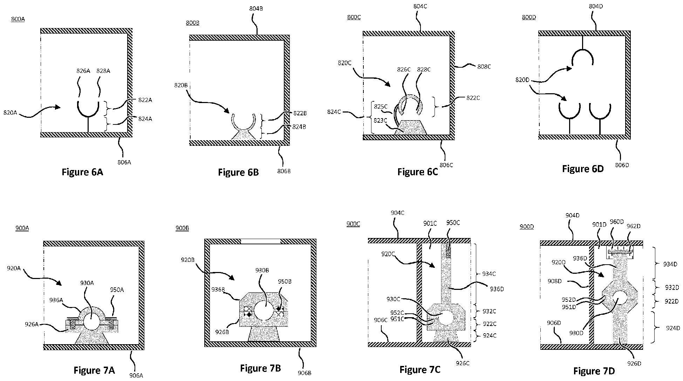

Figures 6A to 6D show schematic cross-sections of various embodiments of mounting structures comprising clips according to the present disclosure. A clip is an implement which is used to grip an object such as a hydraulic fluid line or an electrical line. Figures 6A, 6B, 6C and 6D show frames 800A, 800B, 800C and 800D respectively. The frames 800A-800D are substantially identical to the frame 300 of Figure 3C. Parts of the frames 800A-800D that are substantially identical to parts of the frame 300 of Figure 3C have been labelled with corresponding reference signs increased by "500" and with the suffixes A, B, C, or D added to them respectively.

Figure 6A shows a clip 820A. The clip 820A comprises a receiving portion 822A, for receiving a hydraulic and/or an electric line, and a supporting portion 824A, for supporting the receiving portion 822A. The supporting portion 824A is attached to a wall of the frame 800A, in this example the second wall 806A. The clip 820A is positioned at a midpoint of the width of the second wall 806A. The receiving portion 822A is separated from the second wall 806A by a distance equal to the length of the supporting portion 824A. The width of the receiving portion 822A is greater than the width of the supporting portion 824A. The cross-section of the receiving portion 822A has a U-shape, defining two edges 826A, 828A at its two points most distant from the supporting portion 824A and the second wall 806. The receiving portion 822A can have a cross-sectional shape that generally corresponds to a circular arc, which may subtend an angle that is greater than 180°. The receiving portion 822A is flexible enough to allow for the insertion of an object (e.g. a hydraulic and/or electric line), between the edges 826A and 828A. The receiving portion 822A provides enough grip to secure the object. For instance, the receiving portion 822A may extend around more than half of the object that object that it secures. If the object has a circular cross-section, then the receiving portion 822A may extend around more than 180° of the circle.

Figure 6B shows a clip 820B attached to a frame 800B. The clip 820B comprises a receiving portion 822B and a supporting portion 824B. The receiving portion 822B is substantially identical to the receiving portion 822A. The supporting portion 824B is attached to the second wall 806B. The clip 820B is positioned at a midpoint of the width of the second wall 806B. The supporting portion 824B has a cross-section which varies along its length (i.e. the distance between the first wall 804B and the receiving portion 822B). The supporting portion 824B is wider at the point where it is attached to the second wall 806B than at the point where it is connected to the receiving portion 822B.

Figure 6C shows a clip 820C. Figure 6C shows a frame 800C. The clip 820C comprises a receiving portion 822C and a supporting portion 824C. The receiving portion 822C is U0shaped and comprises a pair of edges 826C, 828C. The edges 826C, 828C face the supporting portion 824C. The supporting portion 824C comprises a base portion 823C and a connecting portion 825C. The base portion 823C is attached to the second wall 806C. The base portion 823C is located at a midpoint of the width of the second wall 806C. The connecting portion 825C is located at a laterally offset point of the base 823C. The connecting portion 825C extends to connect with the receiving portion 822C at a laterally offset point of the receiving portion 822C.

The configuration of the clip 820C reduces the chance of an object (e.g. hydraulic and/or electric lines) accidentally becoming detached from the receiving portion 822C and leaving the cavity of the frame 800C. In order to remove an object that is secured in the clip 820C from the cavity in the frame 800C, it would be necessary to firstly move the object towards the base portion 823C, then secondly move the object away from the connecting portion 825C, thirdly to move the object towards the first wall 804C and finally to move the object away from the third wall 808C. The configuration of the clip 820C therefore offers a balance between a configuration simple enough for quick manual insertion and removal of an object (not requiring disassembly of parts) and a configuration secure enough to further reduce the likelihood of an object accidentally becoming detached and leaving the confines of the frame 800C.

Figure 6D shows an alternative arrangement of clips where more than one clip 820D is attached to a frame 800D. The clips 820D are substantially identical to the clip 820A of in Figure 6A. Two clips 820D are attached to the second wall 806D. In addition to the clips 820D being attached to the second wall 806D, another clip 820D is attached to the first wall 804D. In other embodiments, the clips 820B, 820C from Figures 6B or 6C may also be used.

Any of the clips may be attached to any one of the frames 100, 200, or 400 of Figures 3A, 3B, or 3D. In other examples, the clips 820A, 820B, 820C may be attached to any wall defining the inner cavity of the frame, and in any number and position.

In further alternative embodiments, a clip may have no supporting portion. The clip may only have a receiving portion which may be attached to the frame through mechanical fastening arrangements. The clip may not be attached to a single wall. The clip may be attached to multiple walls and/or be located in a corner of the frame. The clip may comprise a receiving portion with only one edge. Such a clip may additionally have a latch mechanism. The latch mechanism may comprise a supporting portion which in turn comprises a connecting portion. This connecting portion may be flexible enough to allow for the clip to switch from an "open" state, where it can receive a conduit (e.g. hydraulic and/or electric lines) or where a conduit can be removed from the clip, to a "closed" state, in which the clip secures the conduit.

Figures 7A to 7D show schematic cross-sections of various clips according to alternative embodiments. Figures 7A and 7B show frames 900A and 900B respectively. The frames 900A and 900B are substantially identical to the frame 300 of Figure 3C. Parts of the frames 900A and 900B that are substantially identical to parts of the frame 300 of Figure 3C have been labelled with corresponding reference signs increased by "600" and with the suffixes A, or B added to them respectively. Figures 7C and 7D show frames 900C and 900D respectively. The frames 900C and 900D are substantially identical to the frame 400 of Figure 3D. Parts of the frames 900C and 900D that are substantially identical to parts of the frame 400 of Figure 3D have been labelled with corresponding reference signs increased by "500" and with the suffixes C or D added to them respectively.

Figure 7A shows an embodiment of the frame according to the present disclosure. Figure 7A shows a clip 920A. The clip 920A comprises a first part 926A and a second part 936A. The first and second parts 926A, 936A define a clip cavity 930A between them. The first part 926A is attached to the second wall 906A. The first part 926A is located at a midpoint of the width of the second wall 906A. The second part 936A is connectable to the first part 926A. The second part 936A is connectable to the first part 926A through mechanical fastening members 950A. The mechanical fastening members 950A shown in Figure 7A are screws. The mechanical fastening members 950A are located on both sides of the clip cavity 930A. In alternative embodiments, the fastening members may comprise a bolt, latch, screw, nut, pin, etc.

Figure 7B shows another embodiment of a frame with a clip according to the present disclosure. Figure 7B shows a clip 920B. The clip 920B comprises a first part 926B and a second part 936B. The first and second parts 926B, 936B define a clip cavity 930B between them. The first part 926B is attached to the second wall 906B. The first part 926B is positioned at a midpoint of the width of the second wall 906B. The second part 936B is connectable to the first part 926B by magnetic fastening members 950B. The magnetic fastening members 950B shown in Figure 7B are magnets. There is one set of magnetic fastening members 950B on each side of the clip cavity 930B. Each set of magnetic fastening members 950B comprises magnets of opposite polarities such that they are subjected to an attractive force in proximity of each other. One or more magnetic fastening member 950B is located on the first part 926B and one or more magnetic fastening member 950B located on the second part 936B. The benefit of a magnetic fastening arrangement is a simplified operation of such a clip in situations where the structure of the frame complicates access to the clip.

In order to secure an object (e.g. hydraulic and/or electric line) with the clip 920B, it can be placed inside the clip cavity 930B. In order to place an object inside the clip cavity 930B, the first and second parts 926B, 936B can be separated from each other. If the first and second parts 926B, 936B are connected, a force can be applied to separate the second part 936B from the first part 926B. Once the object is placed inside the clip cavity 930B, in order to secure the object with the clip 920B, the second part 936B can be connected to the first part 926B. The first and second parts 926B, 936B can be aligned such that the magnetic members 950B located on the first and second part 926B, 936B become magnetically attracted to each other.

Figure 7C shows an embodiment of a frame with a clip according to the present disclosure. Figure 7C shows a clip 920C. The clip 920C comprises a first part 926C and a second part 936C. The first part 926C and the second part 936C define a clip cavity 930C between them. The first part 926C is attached to the second wall 906C and the second part 936C is attached to the first wall 904C. The first and second parts 926C, 936C are located on a midpoint of the width of the frame cavity 901C. The first part 926C comprises a first receiving portion 922C and a first supporting portion 924C. The second part 936C comprises a second receiving portion 932C and a second supporting portion 934C. The receiving portions 922C, 932C are those which, when the first and second parts 926C, 936C connect, come into contact and define a clip cavity 930C between them. The supporting portions 924C, 934C are those which are attached to the first and second walls 904C, 906C of the frame 900C at one end and connected to the first and second receiving portions 922C, 932C at the other end. The second receiving portion 932C comprises a protrusion 952C on each side of the clip cavity 930C, protruding towards the second wall 906C. The first receiving portion 922C comprises a recess 951C on each side of the clip cavity 930C, configured to receive the protrusions 952C of the second receiving portion 932C. This has the benefit of ensuring a strong connection between the first and second parts 926C, 936C regardless of the orientation of the frame 900C.

The second part 936C is moveable with respect to the first part 926C. The second part 936C can be moved away from the first part 926C, towards the first wall 904C. When the first and second parts 926C, 936C are not in contact, the clip 920C is in an "open state", which allows for a conduit such as hydraulic and/or electric lines to be inserted or removed from the clip cavity 930C. The second part 936C is moveable towards the first part 926C, towards the second wall 906C. When the first and second parts 926C, 936C are in contact, the clip 920C is in a "closed state", which allows for a conduit such as hydraulic and/or electric lines to be secured inside the clip cavity 930C. The second part 936C comprises a biasing member 950C which biases the clip 920C towards its closed state. The biasing member 950C is located in the second supporting portion 934C. The biasing member 950C may be a spring.

In alternative embodiments, the clip may have other arrangements which allow the transition between closed and open states whilst ensuring that this transition does not occur accidentally. The protrusions and recesses may be arranged in any combination between the first and second parts. The first part may have the protrusions and the second part has the recesses instead. Both the first and the second parts may each comprise both one or more protrusion and one or more recess. Both the first and the second parts may comprise no protrusions or recesses.

Figure 7D shows an alternative embodiment of a frame with a mounting structure comprising a clip according to the present disclosure. Figure 7D shows a clip 920D. The clip 920D comprises a first part 926D and a second part 936D. The first part 926D and the second part 936D define a clip cavity 930D between them. The first part 926D is attached to the second wall 906D. The second part 936D is attached to the first wall 904D. The first and second parts 926D, 936D are positioned at a midpoint of the width of the frame cavity 901D. The first part 926D comprises a first receiving part 922D and a first supporting part 924D. The second part 936D comprises a second receiving part 932D and a second supporting part 934D. When the first and second parts 926D, 936D are in contact they act as an additional reinforcement to the frame 900D. Hydraulic and/or electric lines may be inserted through the clip cavity 930D.

A pivot part 960D is attached to the first wall 904D. The pivot part 960D comprises a pivot portion 962D. The pivot portion 962D may be substantially cylindrical in shape. The pivot portion 962D is free to rotate around the axis of its centreline. The second supporting portion 934D is attached to the pivot portion 962D. The second part 936D is moveable with respect to the pivot part 960D. The second part 936D is moveable with respect to the first part 926D. The second receiving portion 932D comprises a groove protrusion 952D on each side of the clip cavity 930D, protruding towards the second wall 906D. The first receiving portion 922D comprises a groove recess 951D on each side of the clip cavity 930D, configured to receive the groove protrusions 952D of the second receiving portion 932D. This has the benefit of ensuring a strong connection between the first and second parts 926D, 936D regardless of the frame orientation.

In order to secure an object (e.g. hydraulic and/or electric line) with the clip 920D, it can be placed inside the clip cavity 930D. In order to place an object inside the clip cavity 930D, the first and second parts 926D, 936D can be separated from each other. If the first and second parts 926B, 936B are in contact, a force can be applied to pivotally separate the second part 936B from the first part 926B. The plane of rotation of the second part 936D is parallel to the plane defined by the third wall 908D and perpendicular to the planes defined by the first and second walls 904D, 906D. Once the object is placed inside the clip cavity 930B, in order to secure the object with the clip 920D, the second part 936D will be brought into contact with the first part 926B. The second part 936B can be pivotally moved such that the groove protrusions 952D align with the groove recesses 951D. The second part 936B can be pivotally moved until the first and second parts 926D, 936D are vertically aligned.

In alternative embodiments, the first part, the second part, or both, may be moveable with respect to each other. For example, the second part may be pivotable with respect of the first part. The second part may be pivotable between a "closed position", where it is in contact with the first part, and an "open position" where it is not in contact with the first part. The second part may be pivotable over a pivot portion. The pivot portion may be located at the point where the second part is in contact with the first wall of the frame. The pivot may however be located at any point along the length of the second part. Any of the pivot portion, the first part, or the second part may have a feature or mechanism which limits the rotation of a part. Any of the pivot portion, the first part, or the second part may have a feature or mechanism which prevents the rotation of a part (i.e. locks a part in place).

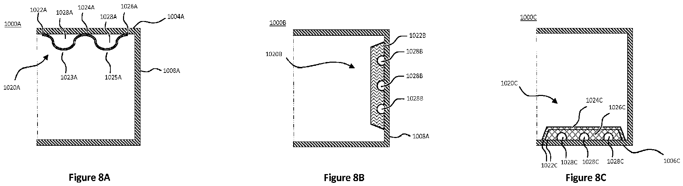

Figures 8A to 8C show schematic cross-sections of various embodiments of a frame with a mounting structure comprising a tray structure. A tray structure is an open receptacle that is capable of securing an object located inside its one or more receiving portions (e.g. recess, cavity) against a surface of the frame to which the tray is attached. The tray structure may have a length greater than its width, and optionally a width greater than its depth. Figures 8A, 8B, and 8C show frames 1000A, 1000B and 1000C respectively. The frames 1000A, 1000B and 1000C are substantially identical to the frame 300 of Figure 3C. Parts of the frames 1000A, 1000B and 1000C that are substantially identical to parts of the frame 300 of Figure 3C have been labelled with corresponding reference signs increased by "700" and with the suffixes A, B, or C added to them respectively.

Figure 8A shows a tray 1020A attached to the frame 1000A. The tray 1020A is attached to the first wall 1004A. The tray 1020A comprises first, second, and third contact points 1022A, 1024A, and 1026A. The contact points 1022A, 1024A, 1026A are in contact with the first wall 1004A. The first contact point 1022A is located near the opening 1012A, the second contact point 1024A is at a midpoint of the width of the first wall 1004A, and the third contact point 1026A is located near the third wall 1008A. The section of the tray 1020A between the first and second contact points 1022A and 1024A defines a first receiving portion 1023A, i.e. a trough that is spaced from the first wall 1004A and opens towards the first wall 1004A. The section of the tray 1020A between the second and third contact points 1024A and 1026A defines a second receiving portion 1025A, i.e. another trough that is spaced from the first wall 1004A. The spaces between the first and second receiving portions 1023A, 1025A and the first wall 1004A define a pair of tray cavities 1028A.

The tray 1020A can be made of metal or plastic. The tray cavities 1028A are configured to receive and secure hydraulic and/or electric lines.

Figure 8B shows a tray 1020B attached to the frame 1000B. The tray 1020B is attached to the third wall 1008B. The tray 1020B comprises a contact surface 1022B. The contact surface 1022B is in contact with the third wall 1008B. The tray 1020B is located at a midpoint of the height of the third wall 1008B. The tray 1020B defines a number of tray cavities 1028B along the contact surface 1022B. The tray cavities 1028B are configured to receive hydraulic and/or electric lines and secure them against the frame 1000B. The shape of the tray cavities 1028B is part-circular in cross-section. The shape of the tray cavities 1028B may be of other cross-sections e.g. square. The tray 1020B may be made of metal or plastic.

Figure 8C shows another tray 1020C attached to the frame 1000C. The tray 1020C is attached to the second wall 1006C. The tray 1020C is located at a midpoint of the width of the second wall 1006C. The tray 1020C comprises an outer part 1024C and an inner part 1026C. The outer part 1024C is made out of a durable, tough material such as metal or plastic. The inner part 1026C is made out of a soft, compliant material such as a foam. The tray 1020C comprises a contact surface 1022C, and which includes surface of both the inner and outer parts 1024C, 1026C. The contact surface 1022C is in contact with the second wall 1006C. The inner part 1026C defines a number of tray cavities 1028C along the contact surface 1022C. The tray cavities can receive hydraulic and/or electric lines and secure them against the frame 1000C. The provision of a soft compliant inner part 1026C allows to safely secure objects (e.g. hydraulic and/or electric lines) of a wide range of shapes and sizes.

The trays 1020A, 1020B, 1020C may be attached to the frame with mechanical fastening members, such as bolts, screws, latches, or other releasable mechanisms. The trays may be attached in any location of the frame. The trays may be attached such that part of the tray, or all of the tray conforms to the shape of a corner of the frame. The trays may be attached to other types of frames such as the frames 100, 300, 400 shown in Figures 3A, 3C, and 3D. The trays may only have one receiving portion. The tray may have more than one receiving portion. The trays may be attached at any of its contact points or at any point of its contact surfaces.

The trays 1020A, 1020B, 1020C may be opaque. Alternatively the trays may be transparent or partly transparent to allow for an easy inspection of a cable and/or a hydraulic conduit is located inside of it.

The tray may be produced by folding a sheet of material such as to define points of contact and receiving portions. This type of tray would have the benefits of being light and involving less material wastage.

The tray may be produced by selecting a block of material, and altering it to define one or more receiving portions (e.g. cavities) along one of its surfaces. This type of tray would have the benefit of being more robust. Also, providing a greater contact surface of the tray would allow for a greater choice of tray attachment.

As will be appreciated from the examples discussed above, any of the mounting structures disclosed herein can secure a cable and/or a hydraulic conduit inside a frame cavity such that the cable and/or the hydraulic conduit extends along a longitudinal direction of the frame.

It will be appreciated that the features described with reference to the above embodiments should not be considered in isolation. Rather, the frame of the present disclosure may include any combination of features that have been described above. For example, the frame may have any combination of mounting structures, such as the foam insert, clips, and trays described above in one or more frame cavities.

The listing or discussion of an apparently prior-published document in this specification should not necessarily be taken as an acknowledgement that the document is part of the state of the art or is common general knowledge.

Preferences and options for a given aspect, feature or parameter of the disclosure should, unless the context indicates otherwise, be regarded as having been disclosed in combination with any and all preferences and options for all other aspects, features and parameters of the disclosure.

## Claims

1. A frame (10, 100, 800A, 1000A) for an agricultural implement (12), the frame (10, 100, 800A, 1000A) being able to support a plurality of ground engaging tools (22a-40b) and extending between a first end (16) that is connectable to an agricultural work vehicle (7) and an opposite, second end (18), wherein the frame (10, 100, 800A, 1000A) defines at least one frame cavity (102, 802A, 1002A) extending at least partly between the first (16) and second end (18) of the frame, and wherein a mounting structure (120, 820A, 1020A) for securing a cable and/or a hydraulic conduit is located inside the frame cavity (102, 802A, 1002A).

2. The frame of Claim 1, wherein the mounting structure (120, 820A, 1020A) is for securing the cable and/or the hydraulic conduit inside the frame cavity (102, 802A, 1002A) such that it extends along a longitudinal direction of the frame.

3. The frame of Claim 1 or Claim 2, wherein the frame (100) comprises at least one aperture (112) providing access to the frame cavity (102) from the outside of the frame (100, 800A, 1000A).

4. The frame of any one of Claims 1 to 3, wherein the mounting structure comprises an insert (120).

5. The frame of Claim 4, wherein the insert (120) extends along some or all of the length of the frame (100).

6. The frame of any of Claims 4 to 6, wherein the insert is secured to an inner surface of the frame, optionally through mechanical or adhesive means.

7. The frame of Claims 4 to 6, wherein the insert has a shape that conforms with the shape of the frame cavity.

8. The frame of Claims 4 to 6, wherein the insert has a rectangular, a circular (120), or a U-shaped cross-section.

9. The frame of any of Claims 4 to 8, wherein the insert (120) comprises an insert-cavity (130), the insert-cavity (130) extending at least partly between the first and second end of the frame (100).

10. The frame of any of Claims 1 to 9, wherein the mounting structure comprises a clip (820A) attached to an inner surface of the frame.

11. The frame of Claim 10, wherein the clip comprises a first part and second part defining a clip cavity between each other, and wherein at least the first part is attached to the inner surface of the frame.

12. The frame of Claim 11, wherein the second part is connectable to the first part through mechanical or magnetic fastening members.

13. The frame of Claim 11, wherein the second part is attached to the inner surface of the frame at an opposite surface to the first part, and optionally wherein the second part of the clip is moveable with respect to the first part.

14. The frame (1000A) of any of Claims 1 to 13, wherein the mounting structure comprises a tray (1020A) attached to an inner surface of the frame (1000A), wherein the tray is configured for securing a cable and/or a hydraulic conduit located inside it against the inner surface of the frame to which the tray is attached.

15. An agricultural implement (12) comprising the frame (10, 100, 800A, 1000A) of any of Claims 1 to 14.
